# EUROPEAN PATENT APPLICATION

(11) **EP 4 407 071 A1**
(43) Date of publication of application: **31.07.2024**
(21) Application number: 23153074.2
(22) Date of filing: 24.01.2023
(51) Int. Cl.: C25B 13/05, C25B 13/08, C25B 9/19

(54) **SEPARATOR FOR ELECTROCHEMICAL DEVICES**

(71) Applicant: Hyve BV, 3001 Leuven (BE)
(72) Inventor: JOBBAGY, Matias, Sint Lambechts Woluwe (BE); VAES, Jan, Mol (BE); NAHRA, Fady, Mol (BE); TSEHAYE, Misgina Tilahun, Mol (BE); DE SCHEPPER, Wim, Mol (BE); VEREECKEN, Philippe, Hoegaarden (BE)
(74) Representative: Winger

(57) **Abstract**

A separator (3) for an electrochemical device (9), comprising: a. A porous carrier (1) having two, respectively a first and a second, largest parallel sides (15, 16) separated by a thickness, and b. A hydrogel (10), made of a first metal oxide (12) and an aqueous medium, present within the first of both largest sides (15) and in at least part of the thickness.

## Description

### Technical field of the invention

The present invention relates to the field of electrochemical devices, in particular, water electrolysers and fuel cells. More in particular, the present invention relates to separators for these electrochemical devices.

### Background of the invention

Electrochemical devices such as water electrolysers and fuel cells typically comprise a cathode and an anode separated by a separator blocking electronic current but allowing ionic current flow. The separator acts as an electrical barrier to prevent short-circuits between the cathode and the anode. As is well-known, in an electrolyser, water may be split into hydrogen gas and oxygen gas. In particular when the water is alkaline, the following oxidation reaction may occur at the anode: 4OH⁻ - 4e⁻ → O₂ + 2H₂O and the following reduction reaction may occur at the cathode: 4H₂O + 4e⁻ → H₂ + 4OH⁻. Thus, at the anode, hydroxide ions are consumed, while at the cathode, hydroxide ions are generated. Therefore, in this case of alkaline electrode reactions, the separator preferably allows hydroxide ions to be transferred from the cathode to the anode.

When utilizing a diaphragm separator, such as Zirfon^{™}, the porous and hydrophilic material allows for the electrolyte, usually an alkaline solution, to penetrate through the interconnected pores. The size of these pores allows for the physical connection of the catholyte and the anolyte, which typically have the same composition, thus enabling the electrolyte to flow between both sides of the cell. The diaphragm in alkaline electrolyzer cells is typically between 300 and 750 micrometers thick, and prevents the oxygen gas created at the anode and the hydrogen gas created at the cathode from combining in large quantities and causing a potentially dangerous reaction (2H₂ + O₂ → 2H₂O). While this thickness limits the risk of an explosion, it also reduces the efficiency of the device due to a higher electrical cell resistance. For this reason, one has to strike a balance between safety and efficiency when deciding on the diaphragm thickness. Optimally, the diaphragm should be as porous as possible, with a small thickness and tortuosity, allowing for a low ionic resistance. In practice, however, the thickness, porosity, and tortuosity are limited by the mechanical stability and by the gas crossover which must be kept below 1% to avoid an explosion.

An alternative type of separator is a membrane, such as an Anion Exchange Membrane (AEM). AEMs are porous as well, but the pores are very small (<2nm), thereby largely preventing the electrolyte from flowing between both sides of the cell while nevertheless permitting the water to swell the membrane. In an AEM, the OH⁻ conductivity is built in the separator by chemical functionalization of the microporosity, usually by quaternary ammonia groups. The OH⁻ are introduced at the cathode side of the membrane and extracted at the anode side of the membrane, but cross-over of cations such as K⁺ from a KOH solution is limited. The microporosity also stops gas crossover and the thickness of the membrane can be considerably lower than for diaphragms. The thickness is only limited by fabrication constraints and mechanical properties and typically are between 50 and 300 micrometers. Unfortunately, AEM membranes are not chemically stable under high alkaline conditions, which are present during operation even when using low alkaline solutions or water. The reactions occurring during operation generate high levels of alkalinity. Therefore, a chemically stable type of membrane would be preferable.

Similar considerations apply to fuel cells.

There is thus still a need in the art for devices and methods that address at least partially some of the above problems.

### Summary of the invention

It is an object of the present invention to provide a good separator. It is a further object of the present invention to provide a good assembly comprising the separator. It is still a further object of the present invention to provide a water electrolyser comprising the separator.

It is an object of the present invention to provide a good method for making a porous carrier for use in the separator.

It is an object of the present invention to provide a good method for making the separator.

The above objective is accomplished by aspects according to the present invention.

It is an advantage of embodiments of the present invention that the separator may have a low gas permeability, i.e., may act as a good gas barrier. It is a further advantage of embodiments of the present invention that the separator may be thin, and have a high ionic conductivity, resulting in low cell resistance. It is still a further advantage of embodiments of the present invention that the separator may be chemically stable, for example, when a strongly alkaline aqueous solution, e.g., having a pH of 14, is used.

In a first aspect, the present invention relates to a separator for an electrochemical device, comprising: a) a porous carrier having two, respectively a first and a second, largest parallel sides separated by a thickness, and b) a hydrogel, made of a first metal oxide and an aqueous medium, present within the first of both largest sides and in at least part of the thickness.

In a second aspect, the present invention relates to an assembly comprising the separator in accordance with embodiments of the first aspect of the present invention, an anode at one side of the separator, and a cathode at another side of the separator, wherein each of the anode and the cathode is either in direct physical contact with the separator or is physically connected to the separator by a layer permeable to hydroxide ions.

In a third aspect, the present invention relates to a water electrolyser comprising the separator in accordance with embodiments of the first aspect of the present invention or the assembly in accordance with embodiments of the second aspect of the present invention.

In a fourth aspect, the present invention relates to process for making a porous carrier for use in a separator in accordance with embodiments of the first aspect of the present invention, comprising the steps of: a) depositing a first layer of a solution comprising a polar organic solvent, a polymeric matrix material dissolved in the polar organic solvent, and particles of a second metal oxide suspended in the polar organic solvent, then b) placing a mesh on the first layer, then c) depositing a second layer of the solution comprising the polar organic solvent, the polymeric matrix material dissolved in the polar organic solvent, and the particles of the second metal oxide suspended in the polar organic solvent on the mesh, then d) applying a further solvent, different from the polar organic solvent, to the first layer and the second layer so as to precipitate at least part of the polymeric matrix material from the first layer and the second layer, thereby forming the porous carrier comprising the polymeric matrix, formed of the precipitated polymeric matrix material, comprising the particles of the second metal oxide dispersed therein.

In a fifth aspect, the present invention relates to a method for making a separator in accordance with embodiments of the first aspect of the present invention, comprising providing a metal alkoxide acidic solution, impregnating the porous carrier with the metal alkoxide acidic solution, and exposing the impregnated porous carrier to an alkaline aqueous solution.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

FIG. 1 is a polymeric mesh that may be used in a porous carrier of a separator in accordance with embodiments of the present invention.
FIGs. 2-5 schematically depict subsequent steps in a process for making a porous carrier of a separator in accordance with embodiments of the present invention.
FIG. 6 schematically shows a porous carrier of a separator in accordance with embodiments of the present invention.
FIGs. 7-8 schematically depict steps in a dip-coating technique for making a separator in accordance with embodiments of the present invention.
FIG. 9 is a plot of the water content of a separator in accordance with embodiments of the present invention as a function of the number of applied dip-coatings to the porous carrier in forming the separator.
FIG. 10 is a plot of the ionic resistance per area for a range of separators.
FIG. 11 is a plot of the voltage through a range of separators as a function of the ionic current across the separators.
FIG. 12 is a schematic vertical cross-section of an assembly in accordance with embodiments of the present invention.
FIG. 13 is a schematic vertical cross-section of a water electrolyser in accordance with embodiments of the present invention.
FIG. 14 is a schematic representation of a hydrogel as used in the first aspect of the present invention.
FIG. 15A is a schematic vertical cross-section of a polymer-ceramic diaphragms, e.g., Zirfon^{™}, of the state of the art. Herein, the right side of FIG. 15A is an enlargement of part of the left side of FIG. 15A, wherein bars are shown to indicate the respective sizes.
FIG. 15B is a schematic vertical cross-section of an Anion Exchange Membrane of the state of the art. Herein, the right side of FIG. 15B is an enlargement of part of the left side of FIG. 15B, wherein bars are shown to indicate the respective sizes.
FIG. 15C is a schematic vertical cross-section of a hydrogel as used in the first aspect of the present invention. Herein, the right side of FIG. 15C is an enlargement of part of the left side of FIG. 15C, wherein bars are shown to indicate the respective sizes.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some, but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

In a first aspect, the present invention relates to a separator for an electrochemical device, comprising: a. a porous carrier having two, respectively a first and a second, largest parallel sides separated by a thickness, and b. a hydrogel, made of a first metal oxide and an aqueous medium, present within the first of both largest sides and in at least part of the thickness.

In embodiments, the electrochemical device may be an electrolyser or a fuel cell. Typically, the separator has a rectangular cuboid shape, although the invention is not limited thereto. In embodiments wherein the porous carrier has a rectangular cuboid shape, the largest sides are opposing surfaces of the rectangular cuboid. In embodiments, the largest sides are the largest by surface area.

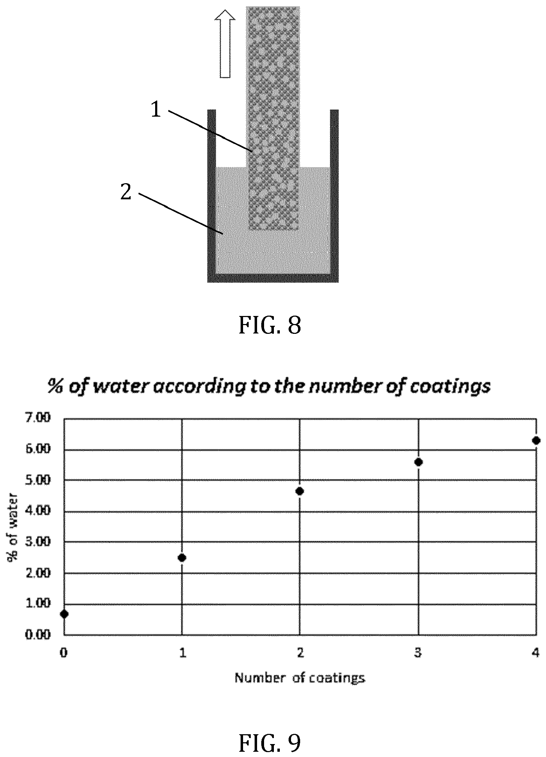

In embodiments, inner spaces of the metal oxide hydrogel comprise the aqueous medium, e.g., an aqueous liquid such as an alkaline aqueous solution. The presence of an alkaline aqueous solution is typical in the case when the metal oxide hydrogel is present in an electrochemical device in use. In embodiments, the alkaline aqueous solution may comprise KOH, NaOH, or t-alkyl ammonium hydroxide, e.g., t-butyl ammonium hydroxide. Herein, the metal oxide may form a chain network, and the inner spaces may be the space between the metal oxide chains of the network. The mean width of these inner spaces is typically very small, e.g., from 1 nm to 10 nm. The metal oxide hydrogel may hold the aqueous medium stagnantly. The aqueous medium, e.g., stagnant aqueous medium, may interact with the first metal oxide of the hydrogel, which forms the chain network, such that water evaporation from the hydrogel may be prevented. The aqueous medium may allow ionic conduction through migration of ions through the aqueous medium. For example to show the strong interaction between the aqueous medium, e.g., water of the aqueous medium, and the hydrogel, FIG. 9 shows the amount of water, in wt.-%, for an exemplary separator as a function of a number of dip coatings performed for coating an exemplary porous carrier with an exemplary hydrogel. Fig. 9 demonstrates a strong interaction between water and the exemplary hydrogel, as evidenced by the increasing capacity of the exemplary separator to contain water as more of the hydrogel is present.

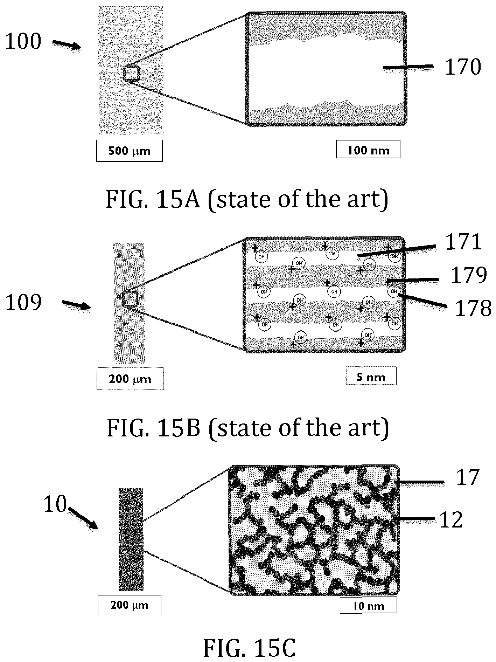

Embodiments of the present invention may offer a solution to the high ionic resistance associated with state-of-the-art polymer-ceramic diaphragms (100) such as Zirfon^{™}, as shown in FIG. 15A, due to their large minimum thickness requirement, and to the limited chemical stability of state-of-the-art Anion Exchange Membranes (109) (AEM), as shown in FIG. 15B. Herein, the AEM (109) typically comprises functional groups comprising covalently bonded cations (179), covalently bonded to the polymer of the membrane, indicated by the positive signs, and counterions that are hydroxide anions (178) so that the AEM (109) may comprise an alkaline aqueous medium (171) in the pores. The functional groups facilitate movement, e.g., diffusion, of hydroxide anions (178) through the aqueous medium (171) in the pores of the AEM (109). However, said covalently bonded functional groups (179) are typically chemically unstable. The present invention enables the integration of a membrane-like function into a ceramic-type hydrogel, supported by a porous carrier (e.g., a polymer-ceramic porous carrier). This combination provides a hydrogel-membrane that can be used for a variety of applications.

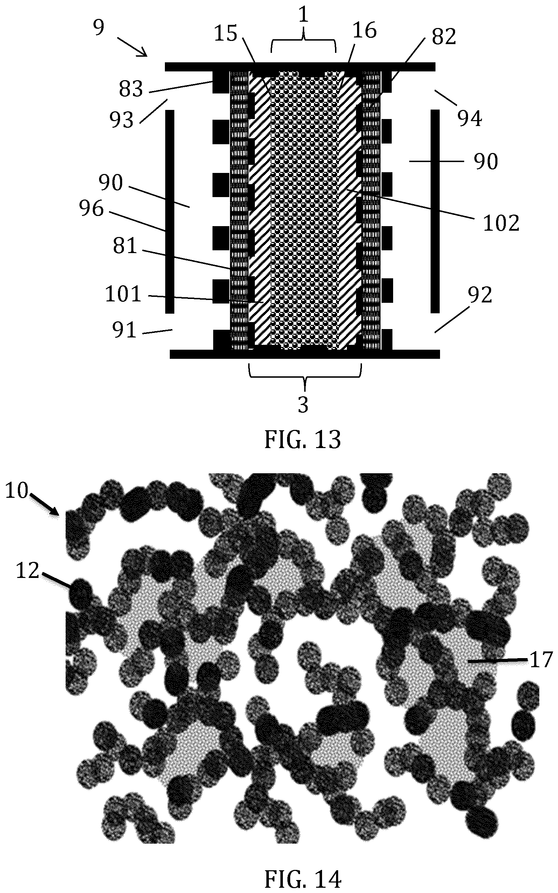

A membrane function may be provided by the hydrogel. This hydrogel comprises pockets of confined, immobile water, ranging in diameter from 2 to 50 nanometers. The water is encased within the ceramic nanoparticle network of the hydrogel, thus creating a nanoconfinement effect. This is represented in FIG. 14 and FIG. 15C where a metal oxide hydrogel (10) is represented which is composed of metal oxide nanoparticles (12) forming a three-dimensional network defining inner spaces in which the aqueous medium (17) is comprised. The inner spaces form pockets in which the aqueous medium (17) is physically trapped.

The pockets may be transformed from confined water pockets to confined electrolyte pockets, such as confined alkaline electrolyte pockets, by contacting an aqueous solution containing a hydroxide compound, like KOH, NaOH, LiOH, or TBAOH, with the hydrogel-membrane. This activates the hydrogel, or separator, by causing the OH⁻ anions and cations to diffuse from the aqueous solution into the water pockets of the hydrogel. Referring to FIG. 15A, an important difference with polymer-ceramic diaphragms (100), such as Zirfon^{™}, of the state of the art, is that the aqueous solution itself (i.e., water and electrolyte) is not penetrating or moving into the separator, i.e., hydrogel, as it would into the pores (170) of a polymer-ceramic diaphragm (100) such as Zirfon^{™}.

In embodiments, for providing ionic conductivity, unlike a polymer membrane, the hydrogel-membrane may not have any built-in chemical groups. Instead, electrolyte functionality (i.e., the presence of an electrolyte, comprising cations and hydroxide groups, in the separator for enabling the easy movement of hydroxide through the separator) may be introduced by said activation.

In one embodiment, the hydrogel membrane can be activated when assembled inside the electrochemical device, e.g., electrolyzer, that is, by an anolyte and/or a catholyte, e.g., by KOH flowing through the electrochemical device. Alternatively, the hydrogel can be activated outside the electrochemical device, e.g., before assembly of the electrochemical device. The hydrogel may be activated with a different electrolyte (e.g., comprising a different salt) than that used for the catholyte or anolyte during operation of the electrochemical device. This activation using the different electrolyte may be done outside the cell or by flowing a different electrolyte through the cell as pre-treatment. For example, the different electrolyte may comprise a hydroxide with a large cation, such as tertiary butyl ammonium hydroxide (TBAOH). This activation can, for example, limit the cross-over of cations from the anolyte and/or catholyte, e.g., K⁺ from the KOH electrolyte, during operation. These large cations may largely remain in the pockets and OH⁻ may have the largest ion transport number amongst ions transported through the separator. Similarly to a membrane of an AEM, OH- anions diffuse through the hydrogel instead of flowing with the water contained in the hydrogel, since the pores of the hydrogel may be so small that the water is nanoconfined within them. That is, the (nano)confinement may keep the pockets of aqueous medium in place. Note that, in contrast to a traditional membrane, the electrolyte functionality is not permanent as the process can be reversed, and the salts can be removed from the hydrogel, i.e., the separator, again by bringing the hydrogel in contact with water. However, as the exchange happens by diffusion, it happens at much slower rates than by pure replacement as for a diaphragm with large diameter pores (e.g., Zirfon^{™}), where confinement may not keep the aqueous medium inside the pores. In the present invention, after activation, the electrolyte functionalization will typically remain stable throughout operation of the electrolyzer as predominantly OH⁻ diffuses in at the cathode side and diffuses out at the anode side. Note that cation diffusion can also happen through the hydrogel, therefore the functionalization, i.e., activation, with large cations can be done to lower the transport number of the cations. The hydrogel-membrane can be regenerated or reactivated when desired.

It is an advantage of these embodiments that gas, such as hydrogen gas and oxygen gas, may not be able to permeate through the inner spaces from a first of both largest parallel sides to a second of both largest parallel sides. As the hydrogel is present within the first of both largest sides of the porous carrier, gas, e.g., hydrogen and oxygen gas, may be hindered in their passage or may not be able to pass, through the separator, from the first side to the second side of the porous carrier. If the entirety of the first of both largest sides of the porous carrier is filled with the hydrogel, gas may not be able to pass, through the separator, from the first side to the second side of the porous carrier.

At the same time, the permeability of hydroxide ions through the hydrogel, i.e., through the separator, may be good. This may be due to diffusion of the hydroxide ions through one side of the separator, into the alkaline aqueous solution contained in the inner spaces (when the separator is in operation), and, simultaneously, diffusion of the hydroxide ions through another side of the separator, out of the alkaline aqueous solution contained in the inner spaces. For this, a highly alkaline aqueous solution is preferred. In embodiments, the alkaline aqueous solution has a pH of from 13.6 to 14.3. This pH is measured when the alkaline aqueous solution has been introduced in the device but when the device containing this solution has never been turned on yet. These embodiments provide an advantage in that they enable a high permeability of hydroxide ions through the separator. In embodiments, water of the alkaline aqueous solution represents from 0.5 to 8 wt.-% of the separator, at 35% relative humidity, a temperature of 298 K, and a pressure of 1 atm.

However, it is not essential that the inner spaces are filled with the alkaline aqueous solution, and instead, the inner space may be filled with another aqueous media such as water. Although the separator may, in that case, have a low ionic conductivity, water may suffice during storage of the separator. The separator is preferably kept wet, as drying of the separator may result in decomposition of the hydrogel into a powder of the first metal oxide.

In embodiments, a porosity of the separator, measured as a volume of any voids in the separator, including the part of the pores of the porous carrier not filled with hydrogel and the inner spaces of the metal oxide hydrogel, divided by the volume of the separator, is from 20 to 80 %, preferably from 40 to 65 % as measured by mercury intrusion porosimetry. In embodiments, the mean pore width of the pores of the porous carrier (i.e., in absence of hydrogel) is from 0.01 to 10 µm, preferably from 0.2 to 6 µm. It is an advantage that the porous carrier used in the separator of the present invention may have a large porosity or mean pore width, so that the ionic conductivity may be large. In embodiments, the first of both largest parallel sides (in absence of hydrogel) has a lower porosity, e.g., from 1 to 20% lower, than the second of both largest parallel sides. In embodiments, a mean pore width of the first of both largest parallel sides (in absence of hydrogel) is smaller, e.g., from 2 times smaller to 100 times smaller, than a mean pore width of the second of both largest parallel sides. In embodiments, the mean pore width of the pores of the first side (in absence of hydrogel) is from 0.01 to 2 µm, preferably from 0.2 to 1.5 µm. In embodiments, the mean pore width of the pores of the second side (in absence of hydrogel) is from 1.0 to 10 µm, preferably from 1.5 to 8.0 µm, such as from 2.0 to 6.0 µm. These embodiments may result in a good mechanical robustness, and good support for the hydrogel at the first of both largest sides of the porous carrier. These embodiments may further result in a good ionic conductivity through the pores at the second side of the porous carrier, provided by the large porosity and/or larger pores at the second side of the porous carrier.

The separator (i.e., the porous carrier + the hydrogel) can also be regarded as having two largest sides separated by a thickness. In embodiments, a mean pore width of the first of both largest parallel sides (in presence of hydrogel) is smaller, e.g., from 2 times smaller to 30 times smaller, than a mean pore width of the second of both largest parallel sides. In embodiments, the mean pore width of the pores of the first side (in presence of hydrogel) is from 0.01 to 2 µm, preferably from 0.2 to 1.5 µm. In embodiments, the mean pore width of the pores of the second side (in presence of hydrogel) is from 0.3 to 8 µm, preferably from 1.0 to 7 µm, such as from 1.5 to 5 µm.

In embodiments, the mean pore width of the first of both largest parallel sides of the porous carrier (in absence of hydrogel) is within 5%, preferably within 1%, more preferably is the same as the mean pore width of the first of both largest parallel sides of the separator (in presence of hydrogel) while the mean pore width of the second of both largest parallel sides of the porous carrier (in absence of hydrogel) is from 25% to 350% higher than the mean pore width of the second of both largest parallel sides of the separator (in presence of hydrogel).

The mean pore width is determined by Capillary Flow Porometry (CFP). CFP may, for example, be conducted using a Porolux^{™} 1000.

In embodiments, the pores, e.g., at least 20%, more preferably at least 50% of the pores, even more preferably at least 90% of the pores, yet more preferably all pores, of the porous carrier extend from the first of both largest parallel sides to the second of both largest parallel sides.

The thickness of the porous carrier can be only partly filled with the hydrogel or can be entirely filled with the hydrogel. The thickness of the porous carrier is preferably as small, i.e., the porous carrier is preferably as thin, as possible for achieving a good ionic conductivity. In embodiments, this thickness may be from 50 to 300 µm. At the same time, a thicker porous carrier may provide a better mechanical robustness. In embodiment, only a part of the thickness of the separator may be filled with the hydrogel. This may be advantageous, as the presence of the hydrogel may be a limiting factor for the ionic conductivity of the separator. In these embodiments wherein only a part of the thickness is filled with the hydrogel, the hydrogel is present at the side of the thickness adjacent to the side of the separator comprising the hydrogel. The other part of the thickness, not filled with the hydrogel, may provide further mechanical robustness, and may have a high ionic conductivity through the open pores of the porous carrier, in particular when said pores are filed with an alkaline aqueous solution when in use in an electrochemical device.

In embodiments, the hydrogel may fill the entirety of the first of both largest sides.

In embodiments, at least 1%, such as at least 10% of the thickness, e.g., the full thickness, is entirely filled with the hydrogel. In embodiments, at least 1 µm, such as at least 5µm, for example, at least 10 µm, of the thickness is entirely filled with the hydrogel. In embodiments, the separator comprises a hydrogel layer, formed of the hydrogel, covering the first of both largest sides of the porous carrier. The hydrogel layer may have a width, in a direction of the thickness separating the two largest parallel sides of the porous carrier, of up to 50 µm, for example, from 1 µm to 20 µm. In embodiments, the separator comprises a hydrogel layer, formed of the hydrogel, covering the second of both largest sides of the porous carrier. In particular embodiments, the hydrogel may fill only a small part of the thickness of the porous carrier for adhesion of the hydrogel layer to the first of both largest sides of the porous carrier, e.g., at most 30%, e.g., at most 20%, e.g., at most 10%, such as at most 1%, of the thickness. In these embodiments, the ionic conductivity of the separator may be good, as the cross-section of the hydrogel layer, parallel to the first side of the porous carrier, may be large. Furthermore, the distance the ions have to diffuse through the hydrogel in the limited space of the pores of the porous carrier is small.

The porous carrier may be any type of carrier that is physically and chemically stable in the conditions in which the separator is to be used. For example, the porous carrier may be any type of mechanical carrier comprising pores, such as a porous ceramic, a porous glass sheet, fiberglass felt, or a porous polymer. Preferably, the porous carrier is chemically resistant to a pH of 14. The porous carrier may function as a carrier for the hydrogel and may provide the separator with mechanical robustness. Indeed, in absence of the support by porous carrier, the hydrogel may collapse. Preferably, the material of the porous carrier itself has a low electrical conductivity, e.g., below 10⁻¹⁰ S/m, preferably below 10⁻¹⁵ S/m, at 20°C and 1 atm. The material of the porous carrier itself may have a very low, e.g., no, permeability to ions, e.g., hydroxide ions. Indeed, the good ionic conductivity of the separator in accordance with embodiments of the present invention is typically due to the ionic conductivity through the pores, i.e., through the hydrogel in the pores, of the porous carrier.

In preferred embodiments, the porous carrier comprises a polymeric mesh chemically resistant to a pH of 14, e.g., at 25°C, preferably at 90°C, a polymeric matrix chemically resistant to a pH of 14, e.g., at 25°C, preferably at 90°C, and embedding the polymeric mesh, and particles of a second metal oxide dispersed in the polymeric matrix. The chemical resistance means that the polymeric mesh may not degrade, i.e., decompose, and may not dissolve, when contacted with an aqueous solution having a pH of 14, e.g., at 25°C, preferably at 90°C.

In embodiments, the thickness separating both largest parallel sides of the porous carrier is from 50 to 300 µm, preferably from 110 to 275 µm, more preferably from 150 to 250 µm. In embodiments, the thickness is the distance between the centres of both largest parallel sides of the porous carrier. It is an advantage of filling the pores of the porous carrier with the hydrogel, that, even when the separator is thin, a low gas cross-over may be achieved for the separator. It is an advantage of these embodiments that a thin separator may result in a low ionic resistivity.

The polymeric mesh may be embedded in the polymeric matrix so that the mechanical strength of the porous carrier may be good. It is an advantage of the presence of the polymeric mesh that it allows the thickness of the porous carrier to be small. The polymeric mesh may be a polymer sheet comprising a plurality of openings. The polymeric mesh may be a woven mesh, wherein yarns, e.g., strands, formed of the polymeric mesh material, are interwoven by a weaving pattern, to form the polymeric mesh. In embodiments, the yarn has a mean diameter of from 5 to 150 µm, such as from 20 to 100 µm. Typically, however, parallel, non-crossing strands are separated from each other, so that openings are formed between the strands. The pores of the porous carrier are typically formed within, i.e., through, these openings. In embodiments, a total area of the openings in the porous carrier, in a plane parallel to both largest parallel sides of the porous carrier, is from 10% to 90%, such as from 30% to 70%, of the area of the porous carrier. In embodiments, the polymeric mesh has a mean thickness, in a direction of the thickness of the porous carrier, of from 15 µm to 200 µm, such as from 30 to 150 µm. In embodiments, the polymeric mesh may be formed of a thermoplastic such as polytetrafluoroethylene (PTFE), polyphenylene sulfide (PPS), polyether ether ketone (PEEK), polyamide (e.g., PA12 or PA6.6), or polypropylene (PP). In embodiments, the polymeric mesh is formed of a polyamide, such as PA 6.6.

In embodiments, the polymeric matrix coats the polymeric mesh. In embodiments, the polymeric matrix is formed of a thermoplastic polymer such as polysulfone, polyvinylidene fluoride (PVDF), or polystyrene (PS). In embodiments, the second metal oxide is selected from TiO₂, 3% yttria-stabilized ZrO₂, and ZrO₂, preferably ZrO₂. It is an advantage of these embodiments that the second metal oxide may improve the water retention properties of the polymeric matrix. Thereby, the hydrogel in the pores of the separator may contain a large amount of the alkaline aqueous solution, which may result in a good ionic conductivity. In other words, the second metal oxide makes the porous carrier more hydrophilic which increases the amount of the hydrogel that can be infiltrated through the pores. The second metal oxides are not part of the hydrogel but can be seen as forming anchors for the hydrogel. In embodiments, the mean diameter of the particles of the second metal oxide is from 1 nm to 5 µm, such as from 10 nm to 1 µm. In embodiments, a ratio of the weight of the particles of the second metal oxide to the weight of the polymeric matrix is from 0.1 to 20, preferably from 1 to 10.

In embodiments, the first metal oxide is CeO₂ or TiO₂. The inventors have found that CeO₂ and TiO₂ may be chemically stable even in strongly alkaline aqueous solutions, e.g., comprising 30% KOH. In embodiments, the ratio of the first metal oxide to the second metal oxide, by weight, is from 0.04 to 0.16.

In embodiments, the porous carrier is not ionic. That is, preferably, the porous carrier is not functionalized with ionic groups. It is an advantage of embodiments of the present invention that ionic conductivity of the separator of the present invention may not require functionalization. Functionalization may imply further steps to form the separator, which may result in a complicated method for forming the separator. Furthermore, functional groups may be chemically unstable, e.g., in the alkaline aqueous solutions used in embodiments of the present invention.

Any features of any embodiment of the first aspect may be independently as correspondingly described for any embodiment of any of the other aspects of the present invention.

In a second aspect, the present invention relates to an assembly comprising the separator in accordance with embodiments of the first aspect of the present invention, an anode at one side of the separator, and a cathode at another side of the separator, wherein each of the anode and the cathode is either in direct physical contact with the separator or is physically connected to the separator by a layer permeable to hydroxide ions.

The anode and the cathode may be any type of anode or cathode as known in the art suitable for an electrolyser or a fuel cell. In embodiments, the anode and the cathode are made of nickel. Preferably, the anode and the cathode are a metallic foam or a metallic mesh. In these embodiments, the anode and the cathode may have a porosity, defined as the volume of pores per volume of the anode or cathode, respectively, of from 10% to 90%, such as from 40% to 85%. In embodiments, the metallic foam or the metallic mesh has a thickness of from 0.5 µm to 100 µm, preferably from 1 µm to 10 µm. The anode and the cathode may further comprise a catalyst for catalyzing the electrolysis of water, such as Raney Ni, fired Co, Fe, or Mo salts as catalyst.

In embodiments, the layer permeable to hydroxide ions may be a hydrogel, for instance a hydrogel as used in any embodiments of the first aspect.

Any features of any embodiment of the second aspect may be independently as correspondingly described for any embodiment of any of the other aspects of the present invention.

In a third aspect, the present invention relates to a water electrolyser comprising the separator in accordance with embodiments of the first aspect of the present invention or the assembly in accordance with embodiments of the second aspect of the present invention.

In embodiments, the electrolyser further comprises an anode at one side of the separator and a cathode at another side of the separator. In embodiments, the anode is in physical contact with the one side of the separator and the cathode is in physical contact with the another side of the separator. In different embodiments, the cathode and the separator are separated by a gap. In embodiments, the anode and the separator are separated by a gap.

In embodiments, the electrolyser further comprises an inlet for allowing water to come into physical contact with the cathode and/or the anode, an outlet for allowing hydrogen to leave the electrolyser, and an outlet for allowing oxygen to leave the electrolyser. Typically, the outlet for allowing hydrogen to leave the electrolyser is fluidically coupled to the side of the separator comprising the cathode. Typically, the outlet for allowing oxygen to leave the electrolyser is fluidically coupled to the side of the separator comprising the anode.

In embodiments, the electrolyser comprises a container for containing an aqueous medium at the side of the cathode and/or a container for containing an aqueous medium at the side of the anode. In embodiments, the container comprises an aqueous medium, e.g., an alkaline aqueous solution. Preferably, the alkaline aqueous solution in the container has a pH of from 12 to 14.5.

Any features of any embodiment of the third aspect may be independently as correspondingly described for any embodiment of any of the other aspects of the present invention.

In a fourth aspect, the present invention relates to a process for making a porous carrier for use in a separator in accordance with embodiments of the first aspect of the present invention, i.e., embodiments of the first aspect comprising the polymeric mesh and the polymeric matrix, comprising the steps of: a) depositing a first layer of a solution comprising a polar organic solvent, a polymeric matrix material dissolved in the polar organic solvent, and the particles of a second metal oxide suspended in the polar organic solvent, then b) placing the mesh on the first layer, then c) depositing a second layer of the solution comprising the polar organic solvent, the polymeric matrix material dissolved in the polar organic solvent, and the particles of the second metal oxide suspended in the polar organic solvent on the mesh, then d) applying a further solvent, different from the polar organic solvent, to the first layer and the second layer so as to precipitate at least part of the polymeric matrix material from the first layer and the second layer, thereby forming the porous carrier comprising the polymeric matrix, formed of the precipitated polymeric matrix material, comprising the particles of the second metal oxide dispersed therein.

It is an advantage of this process, which is sometimes called a phase inversion process, that a porous carrier may be obtained with a low surface roughness. Indeed, when only a single step (i.e., either step a or c) of depositing a layer of the solution were used (instead of two, i.e., steps a and c, as in embodiments of the present invention), the mesh may become eccentrically positioned, resulting in inadmissible surface roughness.

Preferably, the polar organic solvent is a good solvent for the polymeric matrix material. In embodiments, the concentration of the polymeric matrix material dissolved in the polar organic solvent is from 0.1 to 50 wt.-%, preferably from 1 to 40 wt.-%, more preferably from 5 to 30 wt.-%, of the total weight of the polar organic solvent and the polymeric matrix material. In embodiments, the polar organic solvent is selected from 1-methyl-2-pyrrolidone, dimethylformamide, dimethyl sulfoxide, methanol, ethanol, and mixtures thereof. In embodiments, a ratio of the weight of the polar organic solvent to the weight of the suspended particles of a second metal oxide is from 0.1 to 10, preferably from 0.3 to 3. In embodiments, a ratio of the weight of the particles of the second metal oxide to the weight of the polymeric matrix material is from 0.1 to 20, preferably from 1 to 10. In embodiments, the solution of step a) comprises from 10 to 50 wt.-% particles of the second metal oxide, from 10 to 50 wt.-% polar organic solvent and from 1 to 20 wt.-% of the polymeric matrix material.

The substrate may be any substrate suitable for supporting the materials deposited thereon. Preferably, the substrate is chemically stable towards the polar organic solvent, e.g., does not dissolve in the polar organic solvent. For example, the substrate may be formed of glass, silicon, or a ceramic. Preferably, a surface of the substrate, hereinafter referred to as the top surface of the substrate, on which the first layer is deposited is flat.

In embodiments, depositing the first layer may be performed using tape casting, i.e., knife coating. This may facilitate the formation of a thin, uniform first layer. However, when, e.g., the solution has a low viscosity, a uniform first layer may be formed without using tape casting. The first layer may have a thickness, in a direction perpendicular to the top surface of the substrate, from 25 to 150 µm, preferably from 55 to 137.5 µm, more preferably from 75 to 125 µm.

In embodiments, the polymeric mesh is placed on the first layer such that a largest side, by area, of the mesh contacts a top surface of the first layer.

In embodiments, depositing the second layer is performed using tape casting, i.e., knife coating. The second layer may have a thickness, in a direction perpendicular to the top surface of the substrate, from 25 to 150 µm, preferably from 55 to 137.5 µm, more preferably from 75 to 125 µm. In embodiments, the second layer covers the mesh. In embodiments, after deposition of the second layer, all surfaces of the mesh may be covered by the solution comprising a polar organic solvent, a polymeric matrix material dissolved in the polar organic solvent, and the particles of a second metal oxide suspended in the polar organic solvent.

The polymeric matrix material is typically not well soluble in the further solvent. As a result, when the further solvent is applied, at least part, e.g., all, the polymeric matrix material precipitates from the first layer and the second layer and forms the polymeric matrix. Preferably, the polar organic solvent is miscible with the further solvent. In embodiments, the further solvent comprises water. However, preferably, the precipitation is not instantaneous, as the properties of a separator formed after instantaneous precipitation may not be good. Therefore, the further solvent may further comprise the polar organic solvent. This may result in slow, controlled precipitation. In embodiments, the further solvent comprises from 10 to 100 wt.-% of water, and from 0 to 90 wt.-% of a polar organic solvent as defined above, e.g., the same polar organic solvent, preferably from 15 to 70 wt.-% water and from 30 to 85 wt.-% of a polar organic solvent, more preferably from 40 to 60 wt.-% water and from 40 to 60 wt.-% of a polar organic solvent. The inventors have found that when the amount of the water and the polar organic solvent are almost equal, a good separator may be formed, having good ionic conductivity. In embodiments, the further solvent is applied by transferring the substrate with the first layer, the mesh, and the second layer thereon into a bath comprising the further solvent.

After application of the further solvent, resulting in the formation of the porous carrier, the porous carrier may be rinsed. Said rinsing may be performed with water. After said rinsing, the porous carrier may be stored in water.

Any features of any embodiment of the fourth aspect may be independently as correspondingly described for any embodiment of any of the other aspects of the present invention.

In a fifth aspect, the present invention relates to a method for making a separator in accordance with embodiments of the first aspect of the present invention, comprising providing a metal alkoxide acidic solution, impregnating the porous carrier with the metal alkoxide acidic solution, and exposing the impregnated porous carrier to an alkaline aqueous solution. As a result, the hydrogel is formed.

In embodiments, the metal alkoxide acidic solution comprises an alcohol (e.g., ethanol), water, and an acid. In embodiments, a concentration of an acid in the metal alkoxide acidic solution is from 0.1 M to 6 M, preferably from 0.2 to 4M, more preferably from 0.3 to 2M, yet more preferably from 0.4 to 1M, even more preferably from 0.6 to 0.9M, and most preferably from 0.70 to 0.86. In embodiments, the acid is selected from HCl, HClO₄, and H₂SO₄. Preferably, the acid is HCl. In embodiments, the metal alkoxide acidic solution has a pH of from -0.8 to 1, preferably from -0.6 to 0.7, more preferably from -0.3 to 0.5, yet more preferably from 0.0 to 0.4, even more preferably from 0.05 to 0.22, and most preferably from 0.07 to 0.15. The pH may be calculated from the concentration of the acid, and an acid dissociation constant for the acid (e.g., assuming complete dissociation for strong acids such as HCl). In embodiments, the metal alkoxide acidic solution comprises a metal alkoxide that is a precursor to the hydrogel, made of the first metal oxide, and an alcohol, e.g., ethanol. In embodiments, the metal alkoxide is a cerium alkoxide (preferably cerium butoxide) or a titanium alkoxide (preferably titanium butoxide, titanium n-propoxide, titanium isopropoxide, or titanium ethoxide, more preferably titanium butoxide). In embodiments, the metal alkoxide acidic solution comprises from 20 vol-% to 60 vol-% of the alcohol. In embodiments, the metal alkoxide acidic solution comprises from 30 vol-% to 70 vol-% of the metal alkoxide.

In embodiments, the metal alkoxide acidic solution is prepared by mixing an acidic solution and a metal alkoxide solution. In embodiments, after said mixing, the metal alkoxide acidic solution is stirred at a temperature of from - 10°C to 10°C. In embodiments, the impregnating of the porous carrier with the metal alkoxide acidic solution is performed from 1 minute to 1 hour after said mixing of the acidic solution and the metal alkoxide solution. Aging the metal alkoxide acidic solution for a short time may result in a stable hydrogel with good ionic conductivity. For instance, it allows redissolving the eventual accumulation of gel-like material that can appear during the mixing step. In embodiments, the acidic solution comprises from 0.5 M to 10 M, preferably from 1.0 M to 6.0 M of an acid as defined above. In embodiments, the acidic solution comprises from 65 vol-% to 95 vol-% of an alcohol as defined above. In embodiments, the metal alkoxide solution comprises from 20 vol-% to 60 vol-% of an alcohol as defined above, and from 40 vol-% to 80 vol-% of a metal alkoxide as defined above.

In embodiments, the alkaline aqueous solution has a viscosity of from 3.5 to 4.5, preferably from 3.6 to 4.3, more preferably from 3.7 to 4.1 cp. For example, the viscosity may be measured using a Wells-Brookfield Cone/Plate Rheometer. In embodiments, the alkaline aqueous solution has a pH of from 8.5 to 9.7, preferably from 9.0 to 9.4, more preferably from 9.1 to 9.3. In embodiments, the alkaline aqueous solution is a buffer solution. The buffer solution may provide a stable sol-gel reaction of the titanium butoxide when forming the metal oxide hydrogel. The buffer solution may neutralize the acid in the metal alkoxide acidic solution. Thereby, the buffer solution may result in the complete precipitation of soluble metal moieties in the form of metal oxide particles, thus forming the hydrogel. The inventors have found that these conditions may result in a hydrogel with good ionic conductivity.

In embodiments, the porous carrier lies horizontally and the metal alkoxide acidic solution is casted on a first of both largest parallel sides of the porous carrier. It is an advantage of these embodiments that the metal alkoxide acidic solution, and the hydrogel formed therefrom, may completely cover and fill at least the first of both largest sides, and at least part of the thickness, of the porous carrier. It is an advantage of these embodiments that only part of the thickness of the porous carrier may be filled with the metal alkoxide acidic solution, and that the hydrogel may fill only part of the complete thickness of the porous carrier. In embodiments, blade coating may be applied when casting the alkoxide acidic solution on the porous carrier. In other embodiments, a slot-die coating process may be used when casting the alkoxide acidic solution on the porous carrier. In different embodiments, the porous carrier is dip-coated in the alkoxide acidic solution, by vertically immerging the porous carrier in a bath of the alkoxide acidic solution, and removing the porous carrier vertically upwards from the bath. Dip-coating typically results in filling of the porous carrier with the hydrogel over the complete thickness of the porous carrier. In embodiments, the dip-coating may be applied more than one time, preferably two to four times. The inventors have found that the filling of the hydrogel in the porous carrier is best after two to four times applying dip coating.

Any features of any embodiment of the fifth aspect may be independently as correspondingly described for any embodiment of any of the other aspects of the present invention.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

### Example 1: Making a porous carrier for use in a separator

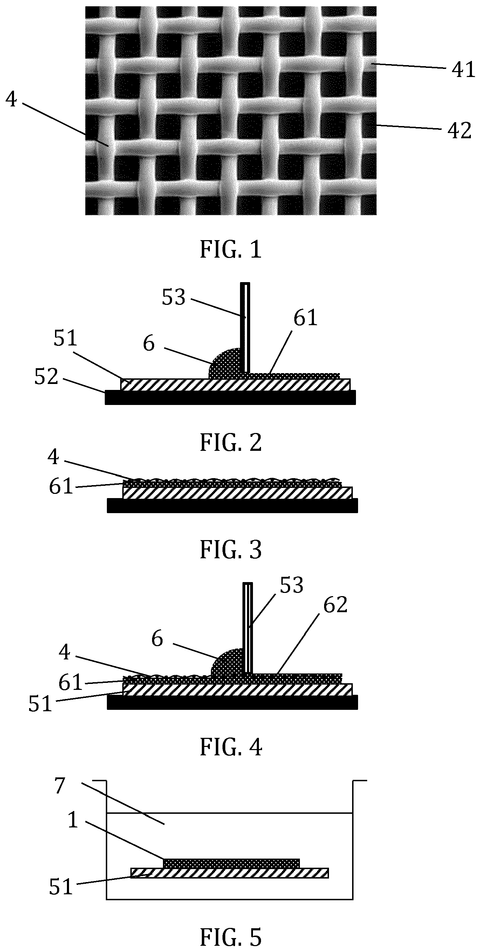

Reference is made to FIG. 1, which shows an example of a polymeric mesh 4 that was used an exemplary method for making a porous carrier in embodiments of the present invention. In this example, the mesh was the commercially available Scrynel NY90HC (obtained from SEFAR AG, Switzerland). This mesh had a good chemical stability in concentrated KOH up to 90°C. The mesh 4 of this example was made of PA 6.6, and had a thickness of 60 µm, and the yarn 41 had a diameter of 39 µm. The open area, in a cross-section of the mesh 4 in a plane of the mesh, i.e., in a plane of the paper in FIG. 1, which is the percentage of the area of the openings 42 between the yarns 41 to the area of the mesh 4, was, in this example, 48,5%. In this example, the mesh 4 was formed of a plain weave of the yarn 41.

Reference is made to FIG. 2. In a process for making a porous carrier, a solution 6, comprising a polar organic solvent, a polymeric matrix material dissolved in the polar organic solvent, and particles of a second metal oxide suspended in the polar organic solvent, may be deposited on a substrate 51.

In this example, the substrate 51 was a glass substrate 51, and was located on a further substrate 52. Subsequently, using a blade 53 moving over the substrate 51, a first layer 61 was formed of the solution 6. In this example, the polar organic solvent was N-methyl-2-pyrrolidone (obtained from Vivochem). The particles of a second metal oxide were ZrO₂ particles (E101 OXIDE obtained from MEL Chemicals). The polymeric matrix material was a polysulfone (UDEL P-1800 from Solvay). In this example, the solution 6 comprised 46 wt.% ZrO₂, 8 wt.% polysulfone and 46 wt.% N-methyl-2-pyrrolidone. The solution 6 was mixed and, after mixing, de-aerated for 30 minutes in a vacuum chamber, before being deposited on the substrate 51.

Reference is made to FIG. 3. Next, the mesh 4, shown in FIG. 1, was deposited on the first layer 61.

Reference is made to FIG. 4. Next, a solution 6, comprising a polar organic solvent, a polymeric matrix material dissolved in the polar organic solvent, and the particles of a second metal oxide suspended in the polar organic solvent, were deposited on the mesh 4. This solution 6 had the same composition as the solution 6 deposited in FIG. 2. Using a blade 53 moving over the substrate 51, a second layer 62 was formed of the solution 6. In this example, the second layer 62 permeated the openings of the mesh 4 and contacts the first layer 61. As a result, the solution 6 of the first layer 61 and of the second layer 62 coated the complete surface area of the mesh 4.

Reference is made to FIG. 5. The first layer, the mesh, and the second layer, on the substrate 51 was transferred into a coagulation bath comprising a further solvent 7, different from the polar organic solvent, for phase inversion of the first layer and the second layer. Although the further solvent 7 is not the same as the polar organic solvent, the further solvent 7 preferably contains the polar organic solvent. This may result in a slow and controlled precipitation of the polymeric matrix material, and thus in the formation of a porous carrier having good properties. In this example, the further solvent 7 contained 50wt-% N-methyl-2-pyrrolidone and 50 wt.-% H₂O. The coagulation bath had a temperature of 25 °C. The first layer, the mesh, and the second layer were retained in the coagulation bath 7 for 30 minutes. Thereby, the polymeric matrix material, i.e., polysulfone, was precipitated from the first layer and the second layer, and thereby deposited on the mesh, so that the porous carrier 1 comprising the polymeric matrix, formed of the precipitated polymeric matrix material, comprising the second metal oxide dispersed therein, was formed. As is typical for phase inversion processes, the carrier 1 that was formed is porous. The porous carrier 1 was subsequently rinsed, e.g., in water, for removing any remaining polar organic solvent, non-precipitated polymeric material and particles of a second metal oxide not dispersed in the precipitated polymeric material. The porous carrier 1 was stored in water.

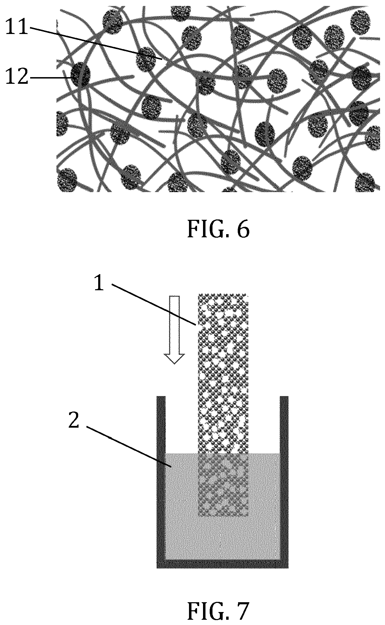

Reference is made to FIG. 6, which schematically shows the polymeric matrix 11 that was, in this example, formed of polymeric chains of polysulfone, and the particles of the second metal oxide 12 dispersed therein.

### Example 2: Making the separator

Reference is made to FIG. 7. In this example, a separator was made by dip-coating. In a method for making the separator, a bath comprising a metal alkoxide acidic solution 2 was first prepared. In this example, the metal alkoxide acidic solution was prepared by first preparing a first solution, i.e., an acidic solution, by adding 32.37mL of ethanol in a first beaker and then adding 9.76mL of hydrochloric acid (HCl 37%) in the first beaker. Then a second solution, i.e., a metal alkoxide solution, was prepared by adding 32.37mL of ethanol in a second beaker and then adding 75.50mL of titanium (IV) butoxide in the second beaker. The second solution was prepared in an ice-water bath on a stirring plate and added to the first solution to form the metal alkoxide acidic solution 2. The metal alkoxide acidic solution 2 was aged for five minutes. Subsequently, the porous carrier 1 prepared in Example 1 above was vertically immersed in the metal alkoxide acidic solution 2. Thereby, the pores of the porous carrier 1 were completely filled with the metal alkoxide acidic solution 2.

Reference is made to FIG. 8. After complete immersion of the porous carrier 1 in the metal alkoxide acidic solution 2, the porous carrier 1 was removed from the metal alkoxide acidic solution 2 by vertically moving the porous carrier 1 out of the metal alkoxide acidic solution 2, thereby forming the porous carrier 1 coated, e.g., filled, with the metal alkoxide acidic solution 2.

After said dip-coating, the porous carrier 1 coated with the metal alkoxide acidic solution 2 was immersed in an alkaline aqueous solution. Said alkaline aqueous solution was an aqueous buffer solution comprising 0.5 M NH₄Cl and 0.5 M NH₃ in water. The alkaline aqueous solution may provide a regulated alkaline environment that neutralizes the excess of acid present in the metal alkoxide acidic solution 2. This may result in the complete precipitation of soluble metal moieties in the form of metal oxide particles in the pores of the porous carrier 1.

The above procedure of dip coating and subsequent immersion in the alkaline aqueous solution may be repeated. Reference is made to FIG. 9, that is a plot of the amount of water, in wt.-% of the total mass of the separator, measured using thermogravimetric analysis, performed at a 30-40 % relative humidity and 298 K, in the separator formed in this example, plotted against the number of dip coatings applied and subsequent immersions in the alkaline aqueous solution, to fill the separator with hydrogel, in accordance with embodiments of the present invention. The separator is as prepared above, before application of an alkaline aqueous solution to the separator, so that only pure water, not comprising ions (e.g., OH⁻), is present in the hydrogel filling the separator. It may be observed that the water content increases with the number of applied dip coatings, i.e., with the amount of hydrogel filling the pores.

The thus formed separator was stored in water. The separator may be activated by immersion of the separator in an alkaline aqueous solution. The activation results in the filling of the hydrogel with alkaline aqueous solution. The ionic conduction of the separator of the activated hydrogel may result from simultaneous introduction of OH- from a first side of the separator into the separator, and outflow of OH- from a second side of the separator. The activation may be performed before introduction of the separator in the electrochemical device. Alternatively, activation may be performed by introducing the separator in the electrochemical device when the electrochemical device comprises the alkaline aqueous solution as the electrolyte.

### Example 3: Gas cross-over and ionic resistance of the separators of the present invention

Table 1 summarizes the gas cross-over for various commercial separators, i.e., Fumatech^{™}, Ionomr^{™}, and Zirfon^{™}, not part of the present invention, and an activated separator in accordance with embodiments of the present invention, at different temperatures. As may be observed, the amount of hydrogen gas permeating the separator of the present invention is much lower than that permeating the commercial separators. This indicates that the hydrogel filling the pores of the porous carrier efficiently prevents gas from permeating the separator.

**Table 1: Gas cross-over of hydrogen gas for a range of separators**

| Separator | %H₂ in Anolyte at 25 °C | %H₂ in Anolyte at 40 °C | %H₂ in Anolyte at 50 °C |
|---|---|---|---|
| Fumatech^{™} | 0.46% | 0.61% | 0.92% |
| Ionomr^{™} | 1.1% | 1.4% | 1.8% |
| Zirfon 500^{™} | 0.9 % | 1.1 % | 1.4% |
| Present invention | 0.39% | 0.58% | 0.89% |

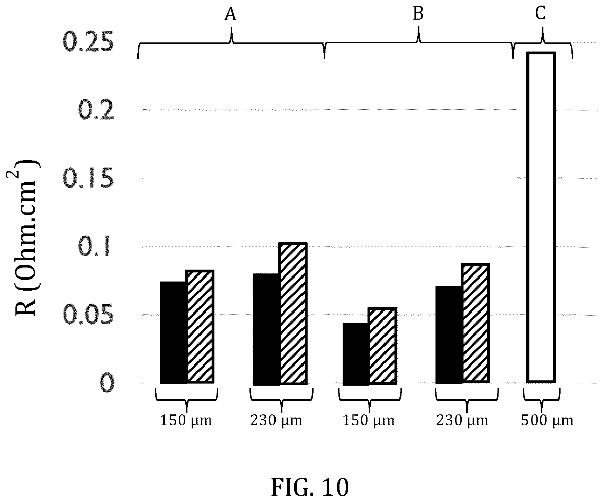

Reference is made to FIG. 10, which is a graph showing the ionic resistance per area (R, in Ω/cm²) for: porous carriers formed using the technique of Example 1 above, in absence of the hydrogel, in accordance with embodiments of the present invention (black bars); the separator formed using the technique of Example 2 above, comprising the porous carrier and the hydrogel, in accordance with embodiments of the present invention (striped bars); and a reference separator Zirfon having a porosity of 50% and a mean pore size of 0.15 µm (white bar, and indicated by C). (Although Zirfon is, here, indicated as "reference", Zirfon could in principle be used as a porous carrier in a separator of embodiments of the present invention.) The porous carriers and separators indicated by A had a porosity of 60% and a mean pore size of 0.22 µm. The porous carriers and separators indicated by B had a porosity of 60% and a mean pore size of 0.08 µm. The thickness for the different porous carriers and separators is indicated in FIG. 10.

The ionic resistance per area was measured in an electrolyte comprising 30 wt.% KOH in water, at 25°C. The ionic resistance per area was measured through an area of a cross-section of each of the porous carriers and separators, perpendicular to the nominal direction of the ionic flow, of 1.13 cm². Herein, a voltage was applied across the porous carriers and separators, and the current through the porous carriers and separators was measured, from which the resistance was derived.

As may be observed in FIG. 10, the ionic resistance per area increases with thickness. The ionic resistance per area is lower for the porous carriers and separators in accordance with embodiments of the present invention than for the reference separator Zirfon. This is in part due to the smaller thickness of the porous carriers and separators in accordance with embodiments of the present invention, that is 150 µm and 230 µm, than the thickness of Zirfon, that is 500 µm. Also, the ionic resistance per area increases with pore size.

Furthermore, it may be observed that the ionic resistance per area is only about 20% larger for the separator, i.e., the porous carrier filled with the hydrogel, than for the porous carrier not filled with the hydrogel. Thus, it appears that the presence of the hydrogel in the porous carrier has a relatively small effect on the ionic resistance per area. This indicates that the conduction of ions, i.e., of OH⁻, through the hydrogel is good.

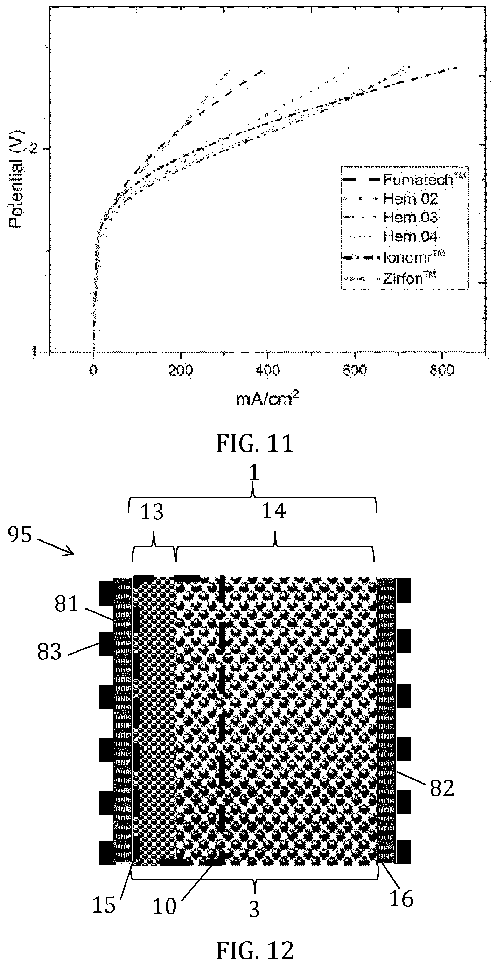

Reference is made to FIG. 11, which is a plot of the potential through a separator as a function of the ionic current per area (in mA/cm²) detected through the separator in accordance with embodiments of the present invention (Hem 02, Hem 03, and Hem 04, wherein Hem 03 and Hem 04 were prepared as described above with different thicknesses, 150 µm and 230 µm respectively, and Hem 02 was prepared in the same way at a thickness of 230 µm, except for using a coagulation bath for forming the porous carrier comprising a different further solvent, that is, a further solvent containing 75wt-% N-methyl-2-pyrrolidone and 25 wt.-% H₂O), and, for comparison, for a range of commercial separators not part of the present invention, as a function of voltage applied across the separator. It may be observed that, for the separators in accordance with embodiments of the present invention, a high ionic current was detected, comparable to that of the Ionomer, and much larger than the ionic current detected for the separators of Fumatech and Zirfon.

### Example 4: An assembly comprising a separator

Reference is made to FIG. 12, that is an assembly 95 comprising a separator 3 comprising a porous carrier 1 in accordance with embodiments of the present invention. The porous carrier 1 comprises two largest parallel sides 15, 16, namely a first of both largest parallel sides 15 and a second of both largest parallel sides 16. The first of both largest parallel sides 15, that is, a first part 13 of the porous carrier 1 at the first of both largest parallel sides 15, has a lower porosity than a second of both largest parallel sides 16, that is, a second part 14 of the porous carrier 1 at the second of both largest parallel sides 16. The first of both largest parallel sides 15, i.e., the first part 13, has a smaller mean pore size than a second of both largest parallel sides 16, i.e., the second part 14.

The part of the porous carrier 1 that is filled with hydrogel 10 is indicated by the box formed by the dashed lines. In this example, the first of both largest parallel sides 15, and the first part 13 of the porous carrier 1, is entirely filled with the hydrogel 10. Also, a part of the second part 14 of the porous carrier 1 is filled with the hydrogel 10. The part of the second part 14 not filled with the hydrogel 10 may provide mechanical stability to the separator 3, while the ionic resistance through that part of the second part 14 not filled with the hydrogel 10 (but typically filled with electrolyte, e.g., an alkaline aqueous solution) may be very low. At the same time, the part of the porous carrier 1 that is filled with hydrogel 10 may sufficiently function as a barrier against gas cross-over.

In this example, the assembly 95 comprises an anode 81 in contact with one side of the separator 3, and a cathode 82 in contact with another side of the separator 3. In this example, the anode 81 is in contact with the side of the separator 3 at which the first of both largest parallel sides 15 of the porous carrier 1 is located, and the cathode 82 is in contact with the side of the separator 3 at which the second of both largest parallel sides 16 of the porous carrier 1 is located. However, this is not required and, instead, the anode 81 and the cathode 82 could be switched with each other.

In this example, the anode 81 is a metallic mesh and the cathode 82 is a metallic mesh. A metallic mesh comprises a plurality of interconnected pores, so that electrolyte, e.g., an aqueous alkaline solution, may move into the interconnected pores of the anode 81 or the cathode 82. The metallic meshes may have a large surface area, resulting in a large surface area where oxidation and reduction may occur. This may result in an increased rate of oxidation and reduction for the anode 81 and the cathode 82. However, alternatively, only one, or neither, of the anode 81 and the cathode 82 could be a metallic mesh. For example, one or both of the anode 81 and the cathode 82 could be a full metallic plate. The anode 81 and the cathode 82 are electrically contacted by metal contacts 83. For example, a potential may be applied to the anode 81 and the cathode 82 via the metal contacts 83.

### Example 5: A water electrolyser comprising a separator

Reference is made to FIG. 13, which is an electrochemical device, in this example a water electrolyser 9, in accordance with embodiments of the present invention. The water electrolyser 9 comprises a separator 3, which comprises a porous carrier 1 completely filled with a hydrogel (not shown). In other words, in this example, the complete thickness of the porous carrier 1 is entirely filled. In this example, the porous carrier 1 has a uniform porosity and a uniform mean pore size, uniform through the thickness of the porous carrier 1. In this example, the separator 3 comprises a hydrogel layer 101, that has the same composition as the hydrogel filling the porous carrier 1, covering a first of both largest sides 15 of the porous carrier 1. In this example, the separator 3 comprises a further hydrogel layer 102, that has the same composition as the hydrogel filling the porous carrier 1, covering a second of both largest sides 16 of the porous carrier 1.

One side of the separator 3 contacts an anode 81 and another side of the separator 3 contacts a cathode 82. In this example, the anode 81 is a metallic mesh and the cathode 82 is a metallic mesh. The anode 81 and the cathode 82 are electrically contacted by metal contacts 83. The water electrolyser 9 further comprises an aqueous alkaline solution 90, which permeates into the pores of the anode 81 and the cathode 82. When a voltage is applied between the anode 81 and the cathode 82, an oxidation reaction may occur at the anode 81, forming oxygen, i.e., O₂, and a reduction reaction may occur at the cathode 82, forming hydrogen, i.e., H₂. The formed oxygen may be collected via an outlet 93 for allowing oxygen to leave the electrolyser 9. The formed hydrogen may be collected via an outlet 94 for allowing hydrogen to leave the electrolyser 9.

In this example, the water electrolyser comprises a container 96 for containing an aqueous medium, e.g., an alkaline aqueous solution, in physical contact with the cathode 82 and the anode 81 and the separator 1. The water electrolyser 9 further comprises a first inlet 91 for allowing an aqueous medium to come into physical contact with the anode 81. The water electrolyser 9 further comprises a second inlet 92 for allowing an aqueous medium to come into physical contact with the cathode 82. For example, an aqueous alkaline solution, e.g., comprising OH⁻ ions, may be introduced through the first inlet 91 and the second inlet 92. By introducing the aqueous alkaline solution into the container 96, the OH⁻ concentration of the aqueous alkaline solution 90 may remain stable.

It is to be understood that although preferred embodiments, specific constructions and configurations, as well as materials, have been discussed herein for devices according to the present invention, various changes or modifications in form and detail may be made without departing from the scope of this invention. Steps may be added or deleted to methods described within the scope of the present invention.

## Claims

1. A separator (3) for an electrochemical device (9), comprising:
a. A porous carrier (1) having two, respectively a first and a second, largest parallel sides (15, 16) separated by a thickness, and
b. A hydrogel (10), made of a first metal oxide (12) and an aqueous medium (17), present within the first of both largest sides (15) and in at least part of the thickness.

2. The separator (3) according to claim 1, wherein the first of both largest parallel sides (15) has a lower porosity than the second of both largest parallel sides (16).

3. The separator (3) according to any one of the preceding claims, wherein inner spaces of the metal oxide hydrogel (10) comprise an alkaline aqueous solution, preferably having a pH of from 13.6 to 14.3.

4. The separator (3) according to any one of the preceding claims, wherein the porous carrier (1) comprises a polymeric mesh (4) chemically resistant to a pH of 14, a polymeric matrix (11) chemically resistant to a pH of 14 and particles of a second metal oxide (12) dispersed in the polymeric matrix (11).

5. The separator (3) according to claim 4, wherein the polymeric mesh (4) is embedded within the polymeric matrix (11).

6. The separator (3) according to any one of the preceding claims, wherein the thickness is from 50 to 300 µm, preferably from 110 to 275 µm, more preferably from 150 to 250 µm.

7. The separator (3) according to any one of the preceding claims, wherein the first metal oxide is selected from TiO₂ and CeO₂.

8. The separator (3) according to any one of the preceding claims, wherein the porous carrier (1) is not ionic.

9. An assembly (95) comprising the separator according to any of the preceding claims, an anode at one side of the separator, and a cathode at another side of the separator, wherein each of the anode and the cathode is either in direct physical contact with the separator or is physically connected to the separator by a layer permeable to hydroxide ions.

10. A water electrolyser (9) comprising the separator (3) according to any of claims 1 to 8 or the assembly (95) of claim 9.

11. The water electrolyser (9) according to claim 10 comprising the assembly (95) of claim 9, further comprising an inlet (91, 92) for allowing water to come into physical contact with the cathode and/or the anode, an outlet (94) for allowing hydrogen to leave the electrolyser (9), and an outlet (93) for allowing oxygen to leave the electrolyser (9).

12. A process for making a porous carrier (1) for use in a separator (3) according to any one of claims 4 to 8 as dependent on claim 4, comprising the steps of:
a. Depositing a first layer (61) of a solution comprising a polar organic solvent, a polymeric matrix material dissolved in the polar organic solvent, and the particles of a second metal oxide (12) suspended in the polar organic solvent, then
b. Placing the mesh (4) on the first layer (61), then
c. Depositing a second layer (62) of the solution comprising the polar organic solvent, the polymeric matrix material dissolved in the polar organic solvent, and the particles of the second metal oxide (12) suspended in the polar organic solvent on the mesh (4), then
d. Applying a further solvent (7), different from the polar organic solvent, to the first layer (61) and the second layer (62) so as to precipitate at least part of the polymeric matrix material from the first layer (61) and the second layer (62), thereby forming the porous carrier (1) comprising the polymeric matrix, formed of the precipitated polymeric matrix material, comprising the particles of the second metal oxide (12) dispersed therein.

13. A method for making a separator (3) according to any one of claims 1 to 8, comprising providing a metal alkoxide acidic solution (2), impregnating the porous carrier (1) with the metal alkoxide acidic solution (2), and exposing the impregnated porous carrier to an alkaline aqueous solution.

14. The method according to claim 13, wherein the alkaline solution has a pH of from 8.5 to 9.7, preferably from 9.0 to 9.4, more preferably from 9.1 to 9.3.

15. The method according to any one of claims 13 to 14, wherein the alkaline solution is a buffer solution.

16. The method according to any one of claims 13 to 15, wherein the porous carrier (1) lies horizontally and wherein the metal alkoxide acidic solution (2) is casted on the porous carrier (1).
